# EUROPEAN PATENT APPLICATION

(11) **EP 0 880 299 A1**
(43) Date of publication of application: **25.11.1998**
(21) Application number: 98109136.6
(22) Date of filing: 20.05.1998
(51) Int. Cl.: H04R 1/08, H01R 13/24, H04M 1/03

(54) **Miniature microphone arrangement**

(30) Priority: 23.05.1997 JP 134053/97
(71) Applicant: Fuji Polymer Industries Co,, Ltd., Nagoya-shi, Aichi-ken 460-0012 (JP)
(72) Inventor: Natsume, Eiichi, Meitou-ku, Nagoya-shi, Aichi 465-0035 (JP); Koizumi, Masakazu, Toyota-shi, Aichi 470-0353 (JP)
(74) Representative: Hafner, Dieter, Dr.rer.nat., Dipl.-Phys.

(57) **Abstract**

A miniature microphone component (1) comprises a main body (11) of a miniature condenser microphone, an anisotropic conductive rubber connector (13) with embedded thin metallic wires and a rubber casting (12) called a "bushing" for protection against vibrations. The rubber casting (12) for protection against vibrations covers the circumference of the main body of the miniature microphone and holds and retains the rubber connector (13) so that the rubber connector (13) contacts with the terminal area of the main body (11) of the miniature microphone. In the sheet of the rubber connector (13) having a disc-like shape in the terminal area side, thin metallic wires (14) are embedded and arranged so as to be positioned corresponding to the two terminals arranged as concentric circles of the main body (11) of the miniature condenser microphone. The miniature microphone component (1) integrated into one component can be assembled easily just with pressure contacting it to terminals on a circuit board inside the main body of a small-size communication device such as a mobile phone. Thus, the jobs of soldering and connecting a lead wire can be omitted and the installation space can be made small.

## Description

The present invention relates to a miniature microphone component that is optimized for being inserted into the main body of a small-size communication device such as a mobile phone or a mobile radio.

At present, the development of ever smaller and lighter small-size portable communication devices is well-established, and thus microphone elements to be used as components of such communication devices are also becoming smaller. For the installation of a miniature microphone in such a communication device, a thin lead wire is soldered to connect the terminals of the miniature-microphone-side to the terminals on a circuit board in the main body of the small-size communication device. Then the miniature microphone is covered with a rubber casting as a waterproof seal and inserted into the small-size communication device.

However, the process of attaching the miniature microphone by soldering with a thin lead wire leads to the two problems. First, the product quality is not reliable, because this process involves a delicate soldering job that has to be performed by hand and hardly can be automated. Second, the installation space cannot be made narrower, since the lead wire has to be connected.

In order to overcome these problems of the prior art, it is an object of the present invention to provide a miniature microphone component having an anisotropic conductive rubber connector with embedded thin metallic wires for an installation method wherein the soldering job is eliminated. This facilitates assembly, and allows the installation space to be made extremely small.

In order to achieve the above object, a miniature microphone component according to the present invention comprises an anisotropic conductive rubber connector provided with embedded thin metallic wires and a rubber casting for protection against vibrations covering the circumference of a main body of a miniature microphone. The anisotropic conductive rubber connector is held and retained so that the rubber connector contacts with the terminal area of the main body of the miniature microphone. The main body of the miniature microphone, the rubber casting for protection against vibrations covering the main body and the anisotropic conductive rubber connector are integrated into one component. Due to this configuration, the miniature microphone component according to the present invention can be assembled easily just with pressure contacting it to terminals on a circuit board and the jobs of soldering and connecting a lead wire can be omitted. Also, the installation space can be made small.

In the configuration mentioned above, it is preferable that the rubber casting for protection against vibrations is made of silicone rubber, since its durability is high and its protection against vibrations is excellent.

In the configuration mentioned above, it is preferable that the thin metallic wires comprised in the anisotropic conductive rubber connector are oriented so as to pass through in the thickness direction of the rubber connector. An electric connection between the terminal area of the main body of the miniature microphone and that of a circuit board is facilitated and secured, and the installation space can, moreover, be made small. The expression "the thin metallic wires are oriented so as to pass through in the thickness direction of the rubber connector" means the condition that straightened thin metallic wires are embedded to extend in the thickness direction of the rubber connector and are exposed at both end faces of the rubber connector.

In the configuration mentioned above, it is preferable that the thin metallic wires comprised in the anisotropic conductive rubber connector are embedded so as to correspond to the shape of the terminal area of the main body of the miniature microphone. A short-circuit between adjacent terminals can be prevented securely by embedding the thin metallic wires only in the portion corresponding to the terminal area of the main body of the miniature microphone, thus improving reliability.

In the configuration mentioned above, polybutadiene, natural rubber, polyisoprene, butadiene-styrene copolymer (SBR), butadiene-acrylonitrile copolymer (NBR), ethylene-propylene-nonconjugated diene copolymer (EPDM), ethylene-propylene copolymer (EPM), polyurethane-polyester-based rubber, chloroprene rubber, epichlorohydrin rubber and silicone rubber can be used as a material for the rubber member of the anisotropic conductive rubber connector, but considering its electrical properties, weather resistance and the like, silicone rubber is the most preferable.

In the configuration mentioned above, a thin metallic wire formed by plating the entire surface of a thin wire made of stainless steel, copper, nickel, iron, solder, aluminum, zinc or the like with a noble metal such as gold, silver, copper or the like can be used in the anisotropic conductive rubber connector. However, the thin metallic wire formed by plating the entire surface of a thin wire made of stainless steel or nickel with gold is the most preferable, since preferable electroconductivity can be obtained and the wire is excellent in corrosion resistance.

In the configuration mentioned above, it is preferable that the diameter of the individual thin metallic wire comprised in the anisotropic conductive rubber connector is 0.010-0.030 mm. When the thin metallic wire is thinner than this range, the mechanical strength of the thin metallic wire decreases, and therefore an electric connection can not be obtained sufficiently by contacting the rubber connector to the terminal area with pressure in some cases. On the other hand, when the thin metallic wire is thicker than this range, an effect of retaining the main body of the miniature microphone elastically by the rubber connector and the rubber casting for protection against vibration can not be obtained sufficiently. Furthermore, only a part of the thin metallic wires might be electrically connected with the terminal area, and thus the conductivity might decrease.

In the configuration mentioned above, it is preferable that the density of the thin metallic wires comprised in the anisotropic conductive rubber connector is 5-30 wires/mm² at the part having the highest density. When the density is lower than this range, the electric connection with the terminal area becomes insufficient in some cases. On the other hand, when the density is higher than this range, adjacent thin metallic wires contact each other, which causes a short-circuit, or an effect of retaining the main body of the miniature microphone elastically by the rubber connector and the rubber casting for protection against vibration can not be obtained sufficiently. Naturally, the rubber connector is used so that the part having the density mentioned above contacts with the terminal area.

In the configuration mentioned above, it is preferable that the anisotropic conductive rubber connector has a compression resilience and can be installed by area-contacting to a terminal area on a circuit board with pressure. The rubber connector is compressed between the terminal area of the main body of the miniature microphone and the terminal area of the circuit board, which causes moderate elastic deformation, thus being installed. The rubber connector area-contacts with both terminal areas. Consequently, the thin metallic wires in the rubber connector can electrically contact both terminal areas reliably.

It is preferable that the rubber portion in the rubber connector has a compression resilience in the range of 20-70 measured with Method A in JIS K6301. When the compression resilience is below this range, the elastic deformation of the rubber connector becomes large, and the thin metallic wires contact each other, so that the electric connection with the terminal area of the circuit board becomes unstable. When the compression resilience is above this range, the elastic deformation of the rubber connector becomes small, so that the reliability of the electric connection between the thin metallic wires in the rubber connector and the terminal area of the main body of the miniature microphone and of the circuit board might decrease. Method A in JIS K6301 for measurement of the compression resilience is performed as follows. A sample is prepared by forming a sample piece of the size specified in JIS K6301. An A-type spring-based hardness meter according to JIS K6301 is used as measuring instrument. Method A in JIS K6301 is in conformity with Type A in ASTM D2240.

The miniature microphone component according to the present invention can be used for various applications, but it is preferable that the miniature microphone component is used to be inserted into the main body of a small-size portable communication device such as a mobile phone or the like. The miniature microphone component according to the present invention can be assembled without soldering a lead wire to it, so that the installation space can be minimized. Reliability in electric connection and vibration resistance can be improved simultaneously, because the main body of the miniature microphone is clamped in and pressed by the rubber casting and the rubber connector. This can add to the product value of small-size portable communication devices, for which an increase of miniaturization and reliability is especially required.

In the miniature microphone component having an anisotropic conductive rubber connector with embedded thin metallic wires according to the configuration mentioned above, a highly reliable electric connection can be established just by slightly compressing the anisotropic conductive rubber connector between the terminal areas on the circuit board inside the small-size communication device and the terminal area of the main body of the miniature microphone. Electricity is conducted only in the thickness direction of the rubber connector, anisotropic conductivity with insulation is provided in the transverse direction, and thin metallic wires are embedded only on the terminal areas, thus obtaining a highly reliable electric connection. Moreover, it is not necessary to adjust the position of the rubber connector, which is very complicated. A plurality of circuits can be connected with a rubber connector, so that the circuit connection by soldering a lead wire is not required. Thus, not only can the installation space be minimized, but a troublesome installation job can be eliminated.

Moreover, the rubber casting for protection against vibrations that is called a "bushing" is shaped so that it can hermetically cover the entire main body of the miniature microphone except for the terminal area and a sound-collecting portion and it can hold and retain the anisotropic conductive rubber connector with embedded thin metallic wires contacting with the terminal area simultaneously. This enables the main body of the miniature microphone and the anisotropic conductive rubber connector to be integrated. Consequently, the miniature microphone can be installed just by inserting the miniature microphone component with the anisotropic conductive rubber connector into a predetermined location inside the small-size communication device, which considerably increases the working efficiency of the assembly.

In addition, the use of the rubber casting or "bushing" for protection against vibrations enhances of course the reliability of the main body of the miniature microphone under vibrations, and the pressure between the microphone terminal area and the circuit board terminal area is held constant due to the rubber resilience of the bushing in a small-size communication device in which the miniature microphone component is built. Thus, the additional effect of an electric connection with high reliability is achieved.

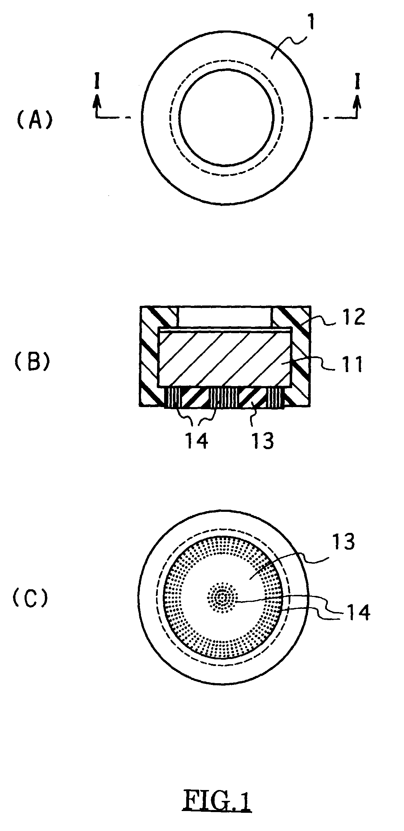

FIG. 1A shows a top view of a miniature microphone component according to an example of the present invention; FIG. 1B shows a sectional view along I-I in FIG. 1A; and FIG. 1C shows a bottom view of the example.

In the following, the present invention is explained more specifically using an example. However, the present invention is by no means limited to the following example.

In an example as shown in FIG. 1A (top view), FIG. 1B (sectional view along I-I in FIG. 1A) and FIG. 1C (bottom view), a miniature microphone component 1 comprises a main body 11 of a miniature condenser microphone, an anisotropic conductive rubber connector 13 with embedded thin metallic wires and a rubber casting 12 for protection against vibrations that is called a "bushing". The size of the miniature microphone component is 6-10mm in diameter and 2-5mm in height. The thickness of the rubber casting 12 for protection against vibrations is about 0.9mm. The anisotropic conductive rubber connector 13 has a thickness of about 1.0mm.

As becomes clear from FIG. 1C (bottom view), in the sheet of the rubber connector 13 having a disc-like shape in the terminal area side, thin metallic wires 14 are embedded and arranged so as to be positioned corresponding to the two terminal areas of the main body 11 arranged as concentric circles.

For the anisotropic conductive rubber connector 13 used in the example mentioned above, specifically, for example, an anisotropic conductive rubber connector "Fujipoly Connector W-Series" (product of Fuji Polymer Ind. Corp.) can be used. In the "Fujipoly Connector W-Series", thin metallic wires made of stainless steel, the entire surface of which is plated with gold, are oriented in the thickness direction of a silicone rubber sheet. It is preferable that the anisotropic conductive rubber connector 13 has a thickness of about 1-2mm, the diameter of the thin metallic wire is about 0.010 - 0.030mm and the orientation density of the thin metallic wire is 5-30 wires/mm² at the part having the highest density.

A silicone rubber casting such as "Fujipoly M Mould 4EC Bushing" (product of Fuji Polymer Ind. Corp.) is shaped so that it can hermetically cover the entire main body of the miniature microphone except for the terminal area and a sound-collecting portion and simultaneously hold and retain the anisotropic conductive rubber connector with embedded thin metallic wires in contact with the terminal areas. Thus it can be used as a rubber casting (bushing) for protection against vibrations.

Alter installing the rubber casting 12 for protection against vibrations around the main body 11 of the miniature microphone, the rubber connector 13 is inserted into the rubber casting 12 at the terminal side of the main body of the miniature microphone. Consequently, the rubber connector can be held and retained by the elasticity of the rubber casting for protection against vibrations in the condition that the rubber connector contacts with the terminal area of the main body of the miniature microphone. Thus, a miniature microphone component in which the main body of the miniature microphone, the rubber casting for protection against vibrations and the rubber connector are integrated can be obtained.

To complete the installation of the miniature microphone component, it is sufficient to insert the miniature microphone component into a small-size communication device so that the anisotropic conductive rubber connector with embedded thin metallic wires is pressed against the terminal area on the circuit board. Thus, the working efficiency of the assembly can be increased considerably, the installation space can be minimized and an electric connection with high reliability is possible.

Possible materials to be used for the rubber in the anisotropic conductive rubber connector with embedded thin metallic wires include polybutadiene, natural rubber, polyisoprene, SBR, NBR, EPDM, EPM, polyurethane-polyester-based rubber, chloroprene rubber, epichlorohydrin rubber and silicone rubber, but considering its electric insulation and weather resistance, silicone rubber is the most preferable.

A thin metallic wire formed by plating the entire surface of a thin wire made of stainless steel, copper, nickel, iron, solder, aluminum, zinc or the like with a noble metal such as gold, silver, copper or the like can be used in the anisotropic conductive rubber connector. However, the thin metallic wire formed by plating the entire surface of a thin wire made of stainless steel or nickel with gold is the most preferable.

## Claims

1. A miniature microphone component, comprising an anisotropic conductive rubber connector provided with embedded thin metallic wires and a rubber casting for protection against vibrations covering the circumference of a main body of a miniature microphone,
wherein the anisotropic conductive rubber connector is held and retained so as to contact with a terminal area of the main body of the miniature microphone, and the main body of the miniature microphone, the rubber casting for protection against vibrations covering the main body and the anisotropic conductive rubber connector are integrated into one component.

2. A miniature microphone component according to claim 1, wherein the rubber casting for protection against vibrations is made of silicone rubber.

3. A miniature microphone component according to claim 1, wherein the thin metallic wires comprised in the anisotropic conductive rubber connector are oriented so as to pass through in the thickness direction of the rubber connector.

4. A miniature microphone component according to claim 1, wherein the thin metallic wires comprised in the anisotropic conductive rubber connector are embedded so as to correspond to the shape of the terminal area of the main body of the miniature microphone.

5. A miniature microphone component according to claim 1, wherein the rubber portion in the anisotropic conductive rubber connector is made of silicone rubber.

6. A miniature microphone component according to claim 1, wherein the thin metallic wire comprised in the anisotropic conductive rubber connector is plated with a noble metal over its entire surface.

7. A miniature microphone component according to claim 1, wherein the diameter of the thin metallic wire comprised in the anisotropic conductive rubber connector is 0.010-0.030 mm.

8. A miniature microphone component according to claim 1, wherein the density of the thin metallic wires comprised in the anisotropic conductive rubber connector is 5-30 wires/mm² at the part having the highest density.

9. A miniature microphone component according to claim 1, wherein the anisotropic conductive rubber connector has a compression resilience and can be installed by area-contacting to a terminal area on a circuit board with pressure.

10. A miniature microphone component according to claim 1, wherein the rubber portion in the anisotropic conductive rubber connector has a compression resilience in the range of 20-70 measured with Method A in JIS K6301

11. A miniature microphone component according to claim 1, built into the main body of a small-size portable communication device.

12. A miniature microphone component according to claim 11, wherein the small-size portable communication device is a mobile phone.
